# EUROPEAN PATENT SPECIFICATION

(11) **EP 1 701 990 B1**
(45) Date of publication and mention of the grant of the patent: **14.05.2008**
(21) Application number: 04804468.9
(22) Date of filing: 29.12.2004
(51) Int. Cl.: C08G 63/91, C08G 69/48, C08G 64/42, C08G 65/48, C08G 65/331, C08G 65/333, C08G 81/00, C08G 85/00

(54) **PROCESS FOR PREPARING A HIGH MOLECULAR POLYCONDENSATE**
VERFAHREN ZUR HERSTELLUNG EINES HOCHMOLEKULAREN KONDENSATS
PROCEDE DE PREPARATION D'UN POLYCONDENSAT A MASSE MOLECULAIRE ELEVEE

(30) Priority: 08.01.2004 EP 04075005
(43) Date of publication of application: 20.09.2006
(73) Proprietor: DSM IP Assets B.V., 6411 TE Heerlen (NL)
(72) Inventor: LOONTJENS, Jacobus, Antonius, NL-6231 KK Meerssen (NL); SCHOLTENS, Boudewijn, Jan, Robert, NL-6151 JA Munstergeleen (NL)
(74) Representative: van der Ploeg, Antonius Franciscus M.J.
(86) International application number: PCT/EP2004/014886
(87) International publication number: WO 2005/068532

(56) References cited:
- EP-A- 0 314 303
- EP-A- 0 374 517
- EP-A- 0 710 684
- WO-A-96/34909
- GB-A- 693 645
- US-A- 4 663 399
- US-A- 5 807 966
- US-A- 6 028 129
- US-A1- 2003 152 728
- US-B1- 6 228 980
- DATABASE WPI Section Ch, Week 198637 Derwent Publications Ltd., London, GB; Class A23, AN 1986-242469 XP002321387 -& JP 61 171732 A (UNITIKA LTD) 2 August 1986 (1986-08-02)
- DATABASE WPI Section Ch, Week 200027 Derwent Publications Ltd., London, GB; Class A23, AN 2000-313030 XP002321388 -& JP 2000 095861 A (UNITIKA LTD) 4 April 2000 (2000-04-04)
- DATABASE WPI Section Ch, Week 199731 Derwent Publications Ltd., London, GB; Class A23, AN 1997-337101 XP002321389 -& JP 09 136947 A (TEIJIN LTD) 27 May 1997 (1997-05-27)
- DATABASE WPI Section Ch, Week 199537 Derwent Publications Ltd., London, GB; Class A23, AN 1995-280977 XP002321390 -& JP 07 179589 A (TEIJIN LTD) 18 July 1995 (1995-07-18)

## Description

The invention relates to a process for preparing a high-molecular polycondensate, i.e. a polyester, a polyamide, a polyester-amide, a polycarbonate, a polyether or a block copolymer by melt-mixing a polyester, a polyamide, a polycarbonate, a polyether or a mixture of at least two of these said polycondensates with a carbonylbislactam.

Such a process is for example known from WO9847940, which publication discloses a process for preparing a high-molecular polyamide or polyester by melt mixing a polyamide or polyester having a lower molecular weight with a carbonylbislactam.

Disclosed are examples of increase of the molecular weight of polyamide 6 and PET by melt mixing said polymers with carbonyl biscaprolactam in a Brabender mixer.

A disadvantage of the process of WO9847940 is that during said melt mixing if applied in e.g. a single screw extruder fluctuations in the extruder torque occur, consequently resulting in an unstable process for preparing a high-molecular polycondensate.

Object of the present invention is to provide a process for preparing a high-molecular polycondensate, which process exhibits this disadvantage to a smaller extent.

This object is achieved with the process according to the invention, characterized in that during said melt mixing also a diepoxide is present.

The process according to the invention is a more stable process than the process as disclosed in WO9847940, resulting is less fluctuations in the torque and furthermore in a more constant output of e.g. a single screw extruder.

An additional advantage of the process according to the invention is that strands produced by an extruder during a melt-mixing process are less susceptible to breakage than strands produced by an extruder according to the process of WO9847940.

Another additional advantage of the process according to the invention is that the polycondensate obtained with the process according to the invention, especially in the case of polyamides, shows less discoloration e.g. under severe process conditions, such as at high temperature, than polycondensate obtained with the process according to WO9847940.

A further additional advantage of the process according to the invention is that a polycondensate with higher molecular mass can be obtained than in the case of the process according to WO9847940, or that with the process according to the invention the same molecular mass can be achieved in a shorter time. Alternatively, with the process according to the invention, a lower amount of e.g. carbonyl biscaprolactam may be used in order to still obtain a comparable molecular mass as obtainable with the process according to W09847940. With the process according to the invention, a polycondensate having a lower molecular weight is transferred into a high molecular polycondensate.

Carbonyl bislactam is understood to be a compound having formula (I): 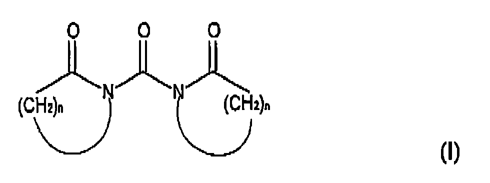 in which formula n is an integer of between 3 and 15. Preferably n = 5 to 12. More preferably n = 5. This latter compound, carbonyl biscaprolactam, shows the best activity in obtaining a higher molecular mass with the process according to the invention.

Preferably, use is made of 01. to 4 wt% of the bislactam, relative to the amount of the polycondensate.

The diepoxide, in this application also referred to as epoxy resin, according to the invention may have an aliphatic, aromatic, cycloaliphatic, araliphatic or heterocyclic structure. It contains epoxy groups as side groups or these groups form part of an alicyclic or heterocyclic ring system. The epoxy groups are preferably linked to the residual molecule as glycidyl groups through ether or ester bonds, or they are N-glycidyl derivatives of heterocyclic amines, amides, ureas or imides. Epoxy resins of these types are commonly known and commercially available.

The epoxy resins contain two epoxy radicals, typically those of formula (II) 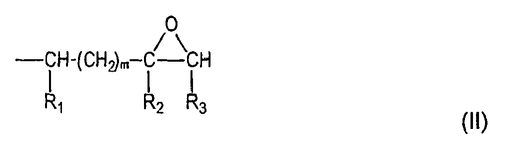 which radicals are linked directly to carbon, oxygen, nitrogen or sulfur atoms, wherein R₁ and R₃ are both hydrogen, R₂ is hydrogen or methyl, and m=0, or wherein R₁ and R₃, taken together, are -CH₂-CH₂- or -CH₂-CH₂-CH₂-, in which case R₂ is hydrogen and m=0 or 1.

Illustrative examples of epoxy resins are:
I) Diglycidyl and di(β-methylglycidyl) esters which are obtainable by reacting a compound containing two carboxyl groups in the molecule and epichlorohydrin or glycerol dichlorohydrin or β-methyl epichlorohydrin. The reaction is conveniently carried out in the presence of a base.
   Compounds containing two carboxyl groups in the molecule may suitably be aliphatic dicarboxylic acids. Exemplary of these dicarboxylic acids are glutaric acid, adipic acid, pimelic acid, suberic acid, azelaic acid, sebacic acid or dimerised or trimerised linoleic acid.
   Cycloaliphatic dicarboxylic acids may also be used, for example tetrahydrophthalic acid, 4-methyltetrahydrophthalic acid, hexahydrophthalic acid or 4-methylhexahydrophthalic acid.
   Aromatic dicarboxylic acids may also be used, including phthalic acid or isophthalic acid.
II) Diglycidyl or di(β-methylglycidyl) ethers which are obtainable by reacting a compound containing two free alcoholic hydroxyl groups and/or phenolic hydroxyl groups in the molecule with a suitably substituted epichlorohydrin under alkaline conditions or in the presence of an acid catalyst and subsequent treatment with an alkali.
   Ethers of this type are typically derived from acyclic alcohols such as ethylene glycol, diethylene glycol and higher poly(oxyethylene) glycols, 1,2-propanediol, or poly(oxypropylene) glycols, 1,3-propanediol, 1,4-butanediol, poly(oxytetramethylene) glycols, 1,5-pentanediol, 1,6-hexanediol, sorbitol, as well as from polyepichlorohydrins. They may also be derived from cycloaliphatic alcohols such as 1,3- or 1,4-dihydroxycyclohexane, bis(4-hydroxycyclohexyl)methane, 2,2-bis(4-hydroxycyclohexyl)propane or 1,1-bis(hydroxymethyl)cyclohex-3-ene, or they contain aromatic nuclei, such as N,N-bis(2-hydroxyethyl)aniline or p,p'-bis(2-hydroxyethylamino)diphenylmethane.
   The epoxy resins may also be derived from mononuclear phenols, as from resorcinol, 1,2-benzenediol or hydroquinone, or they are based on polynuclear phenols such as 4,4'-dihydroxybiphenyl, bis(4-hydroxyphenyl)methane, 2,2-bis(4-hydroxyphenyl)propane, 2,2-bis(3,5-dibromo-4hydroxyphenyl)propane, 4,4'-dihydroxydiphenylsulfone, or 9,9-bis(4-hydroxyphenyl)fluorene, or on condensates of phenols with formaldehyde which are obtained under acid conditions, for example phenol Novolaks.
III) Bis(N-glycidyl) compounds, obtainable typically by dehydrochlorination of the reaction products of epichlorohydrin with amines that contain two amino hydrogen atoms. These amines are typically bis(4-aminophenyl)methane, m-xylylenediamine or bis(4-methylaminophenyl)methane.
   The bis(N-glycidyl) compounds, however, also include N,N'-diglycidyl derivatives of cycloalkylene ureas such as ethyleneurea or 1,3-propyleneurea, and N,N'-diglycidyl derivatives of hydantoins, typically of 5,5-dimethylhydantoin.
IV) Bis(S-glycidyl) compounds, typically bis(S-glycidyl) derivatives that are derived from dithiols such as 1,2-ethanedithiol or bis(4-mercaptomethylphenyl) ether.
V) Epoxy resins containing a radical of formula (II), wherein R₁ and R₃ together are -CH₂-CH₂- and m is 0, typically bis(2,3-epoxycyclopentyl) ether, 2,3-epoxycyclopentylglycidyl ether or 1,2-bis(2,3-epoxycyclopentyloxy) ethane. An epoxy resin containing a radical of formula (II), wherein R₁ and R₃ together are -CH2-CH2- and m is 1, is typically 3,4-epoxycyclohexylmethyl-3,4-epoxycyclohexylcarboxy, commercially available from e.g. Union Carbide as ERL 4221.

By reason of the preparative process, the above-mentioned difunctional epoxy resins may contain minor amounts of mono- or trifunctional groups.

Diglycidyl compounds of aromatic structure are mainly used.

It is furthermore possible to use a mixture of epoxy resins of different structure.

Trifunctional or polyfunctional epoxy resins may further be added to obtain branched products.

Suitable epoxy resins are typically:
a) liquid diglycidyl ethers of bisphenol A, e.g. Araldit^{®} GY 240, Araldit^{®} GY 250, Araldit^{®} GY 260, Araldit^{®} GY 266, Araldit^{®} GY 2600, Araldit^{®} MY 790;
b) solid diglycidyl ethers of bisphenol A, e.g. Araldit^{®} GT 6071, Araldit^{®} GT 7071, Araldit^{®} GT 7072, Araldit^{®} GT 6063, Araldit^{®} GT 7203, Araldit^{®} GT 6064, Araldit^{®} GT 7304, Araldit^{®} GT 7004, Araldit^{®} GT 6084, Araldit^{®} GT 1999, Araldit^{®} GT 7077, Araldit^{®} GT 6097, Araldit^{®} GT 7097, Araldit^{®} GT 7008, Araldit^{®} GT 6099, Araldit^{®} GT 6608, Araldit^{®} GT 6609, Araldit^{®} GT 6610;
c) liquid diglycidyl ethers of bisphenol F, e.g. Araldit^{®} GY 281, Araldit^{®} GY 282, Araldit^{®} PY 302, Araldit^{®} PY 306;
d) solid polyglycidyl ethers of tetraphenylethane, e.g. CG Epoxy Araldit^{®} 0163;
e) solid and liquid polyglycidyl ethers of phenol formaldehyde Novolak, e.g. EPN 1138, EPN 1139,GY 1180, PY307;
f) solid and liquid polyglycidyl ethers of o-cresolformaldehyde Novolak, e.g. ECN 1235, ECN 1273, ECN 1280, ECN 1299;
g) liquid glycidyl ethers of alcohols, e.g. Shell^{®} glycidyl ether 162, Araldit^{®} DY 0390, Araldit^{®} DY 0391;
h) liquid glycidyl ethers of carboxylic acids, e.g. Shell^{®} Cardura E terephthalate, Araldit^{®} PY 284;
i) solid heterocyclic epoxy resins (triglycidylisocyanurate), e.g. Araldit^{®} PT 810;
j) liquid cycloaliphatic epoxy resins, e.g. Araldit^{®} CY 179;
k) liquid N,N,O-triglycidyl ethers of p-aminophenol, e.g. Araldit^{®} MY 0510;
l) tetraglycidyl-4-4'-methylenebenzamine or N,N,N',N'-tetraglycidyldiaminophenylmethane, e.g. Araldit^{®} MY 720, Araldit^{®} MY 721.

Preferred epoxy resins are diglycidyl ethers of bisphenols, typically 2,2-bis(4-hydroxyphenyl)propane (bisphenol A), bis(4-hydroxyphenyl)sulfone (bisphenol S) or mixtures of bis(ortho-/para-hydroxyphenyl)methane (bisphenol F), or 3,4-epoxy-6-methylcyclohexyl-3',4'-epoxy-6'-methylcyclohexane-carboxylate.

More preferred difunctional epoxy resins are the solid diglycidyl ethers of bisphenol A type, e.g. Araldit^{®} GT 6071, GT 7071, GT 7072, GT 6097 and GT 6099, the liquid epoxy resins of the bisphenol F type, e.g. Araldit^{®} GY 281 or PY 306, the liquid glycidyl ethers of carboxylic acids, e.g. Shell^{®} Cardura E terephthalate, Araldit^{®} PY 284 and the liquid cycloaliphatic epoxy resins, e.g. Araldit^{®} CY 179.

It is preferred to use 0.01-5 wt%, more preferably 0.02-2 wt% of diepoxide, relative to amount of the polycondensate.

In principle, the process of the invention can be used for all types of said polycondensates as long as they comprise -OH, -NH₂ or -COOH groups.

The polyesters include at least polyesters derived from aliphatic dicarboxylic acids and diols, polyesters from aliphatic diols and aromatic dicarboxylic acids, copolyesters that are partially aliphatic and partially aromatic and polyesters that contain units derived from cycloaliphatic dicarboxylic acids. Specific examples are polybutylene adipate, polyethylene terephthalate, polyethylene naphthalate, polybutylene terephthalate, polybutylene naphthalate, copolyesters of polybutylene adipate and polybutylene terephthalate, copolyesters of polybutylene terephthalate and polyethers such as polytetrahydrofurane, the polyester derived from butanediol and cyclohexane dicarboxylic acid, polycaprolactone, polypivalolactone and polyhydroxyalkyl acids such as polylactic acid.

Particularly suitable polyesters are PET, PTT, PBT, PCT and corresponding copolymers or blends such as PBT/PC, PBT/PS, PBT/ASA, PBT/ABS, PET/ABS, PET/PC or also PBT/PET/PC or recyclates of said polyesters or said blends. More preferred are PET and the copolymers thereof as well as PBT blends and/or copolymers. Most preferred are PET and/or PBT recyclates.

The polyamides include at least the aliphatic polyamides, for example polyamide-4, polyamide-6, polyamide-8, polyamide-11, polyamide-12, polyamide-4,6, polyamide-6,6, polyamide-6,9, polyamide-6,1 0, polyamide-6,12, polyamides derived from an aliphatic diamine and an aromatic dicarboxylic acid, for example polyamide-4,T, polyamide-6,T, polyamide-4,1, etc., in which T stands for terephthalate and I for isophthalate, copolyamides of linear polyamides and copolyamides of an aliphatic and a partially aromatic polyamide, for example 6/6,T, 6/6,6/6,T, as well as amorphous polyamides of the Trogamid^{®} PA 6-3-T and Grilamid^{®} TR 55 types. Additional to polyamide this invention also comprises the corresponding copolymers and blends, e.g. PA/PP and PA/ABS, as well as mixtures of virgin plastic and recyclate. Furthermore polyamides also include recyclates of polyamides. The process is particularly advantageous in the case of partially aromatic polyamides and copolyamides that require in general a relatively long polymerization time.

Polycarbonate (PC) will be taken to mean virgin polycarbonate as well as polycarbonate recyclate. PC is typically obtained from bisphenol A and phosgene or a phosgene analog such as trichloromethylchloroformate, triphosgene or diphenylcarbonate, in the last mentioned case by condensation, usually by the addition of a suitable transesterification catalyst, such as a boron hydride, an amine such as 2-methylimidazole or a quaternary ammonium salt. In addition to bisphenol A, other additional bisphenol components may be used, and also monomers which may be halogenated in the benzene nucleus.

The invention is of particular importance with respect to polycondensate recyclates recovered from production waste, useful material collections, or the obligatory returnables originating from, inter alia, the packaging industry, the automotive industry or the electrical sector. The polycondensate recyclates are damaged by heat and/or hydrolysis in a wide variety of ways. Furthermore, these recyclates may also contain minor amounts of plastics of different structure such as polyolefins, polyurethanes, ABS or PVC. In addition, these recyclates may also contain as standard impurities, for example, paint residues, contact media or paint systems, metal traces, water traces, fuel residues, or inorganic salts. In the case of blends or mixtures, the compatibility may be enhanced by the addition of known compatibilisers.

The process according to the invention can be carried out in a simple manner using the usual melt-mixing techniques and equipment, for example by dry blending the polycondensate having a lower molecular weight, the carbonyl bislactam and the diepoxide and optionally also other additives in a solid state, for example in a tumbler drier, after which the mixture obtained is melted in a usual melt-mixing apparatus, for example a Haake kneader, a Brabender mixer or a continuous mixer as e.g. a single- or double-screw extruder. An extruder is a machine comprising a barrel and at least one screw, commercially available from several companies as e.g. Maillefer, Buss and Krup-Werner&Pfleiderer. Preferably an extruder is used. This allows a continuous production of a high molecular polycondensate while inert conditions for preparing the high molecular polycondensate can be maintained. More preferably a single screw extruder is used. This gives a more cost efficient process for preparing a high-molecular polycondensate.

The different components can also be fed to the mixing apparatus separately, on a substrate such as silica gel, in the form of a master batch, or with a polymer powder or wax, e.g. a polyethylene wax.

Best results are obtained if the lower molecular polycondensate is thoroughly dried before the melt mixing.

Suitable temperatures for melt mixing are, for example, for:

| | |
|---|---|
| PA-6 | 230-270 °C; |
| PA-6,6 | 260-300 °C: |
| PA-4,6 | 300-330 °C; |
| PBT | 230-280 °C; |
| PET | 260-310 °C; |
| PBT/PC | 230-280 °C, and |
| PC | 260-320 °C |

Another embodiment of the invention comprises adding the carbonyl bislactam and the diepoxide to a molten polycondensate product stream in a polymerization process. This can be done by adding the carbonyl bislactam and the diepoxide to the molten polycondensate in the polymerization reactor. A further embodiment comprises feeding the carbonyl bislactam and the diepoxide to the molten polycondensate just before it leaves the polymerization reactor, e.g. at the exit of the reactor or just before the exit of the reactor. In this case static mixing elements in the exit may suitably be used. The polymerization process can be carried out both batch wise or in a continuous mode. In the first case a reduction of the residence time in the reactor can be realized and thus an increase in productivity; with the continuous process the after-condensation step that is usually necessary to obtain a polyamide or polyester of sufficient molecular weight can so be avoided.

In addition to the carbonyl bislactam and the diepoxide, further additives and/or stabilizers may be added to the polycondensate in the process according to the invention. These further additives and/or stabilizers are known to the skilled person and are selected according to the specific demands made of the end product. In particular, it is possible to add light stabilizers or also antioxidants or additional antioxidants ("Plastics Additives Handbook", Ed. R. Gachter and H. Muller, Hanser Verlag, 3rd edition, 1990; in particular pages 88/89, 92,94, 251/252 and 258,259). Likewise it is possible to add further modifiers, such as slip agents, mould release agents, impact strength improvers, fillers or reinforcing agents such as glass fibers, flame retardants, antistatic agents and, especially for PBT/PC recyclates, modifiers that prevent transesterification during processing.

Particularly suitable additives and/or stabilizers include:
- Antioxidants such as alkylated monophenols; alkylthiomethylphenols; hydroquinones and alkylated hydroquinones; hydroxylated thiodiphenyl ethers; alkylidenebisphenols; O-, N- and S- benzyl compounds; 1.8. hydroxybenzylated malonates;aromatic hydroxybenzyl compounds; triazine compounds;
   benzylphosphonates;acylaminophenols; esters of β-(5-tert-butyl-4-hydroxy-3-methylphenyl)propionic acid with mono- or polyhydric alcohols; esters of β-(3.5-dicyclohexyl-4-hydroxyphenyl)propionic acid with mono- or polyhydric alcohol; esters of 3.5-di-tert-butyl-4hydroxyphenyl acetic acid with mono- or polyhydric alcohols; amides of β-(3,5-di-tert-butyl-4-hydroxyphenyl)propionic acid.
- UV absorbers and light stabilizers such as 2-(2'-hydroxyphenyl)benzotriazoles; 2-hydroxybenzophenones; esters of substituted and unsubstituted benzoic acids; acrylates; nickel compounds; sterically hindered amines; oxamides; 2-(2-hydroxyphenyl)-1.3.5-triazines.
- Metal deactivators.
- Phosphites, phosphonites and diphosphonites.
- Peroxide scavengers.
- Polyamide stabilizers, for example, copper salts in combination with iodides and/or phosphorus compounds and salts of divalent manganese.
- Basic co-stabilizers, for example, melamine and its derivatives and polyvinylpyrrolidone.
- Nucleating agents.
- Fillers and reinforcing agents, for example, silicates, glass fibers, glass beads, talc, kaolin, mica, barium sulfate, metal oxides and hydroxides, carbon black and graphite.
- Other additives, for example, plasticizers, lubricants, emulsifiers, pigments such as titanium dioxide, fluorescent whitening agents, flame retarders, antistatic agents, blowing agents and, in the case of recyclate blends, in particular compatibilisers, typically copolymers, more particularly block copolymers of styrene with butadiene or of styrene, butadiene and acrylonitrile.
- Further additives for epoxy resins are the compounds customarily used for curing epoxy resins, e.g. carboxylic anhydrides, polyamines, polythiols, tertiary amines.
- Benzofuranones and indolinones.

Said fillers and reinforcing agents generally are added between 5 and 50 wt%, based on total mass of polycondensate and total mass of additives. Preferably fillers and reinforcing agents are added between 10 and 30 wt%, based on total mass of polycondensate and total mass of additives.

The other additives as mentioned above are generally added between 0.01 and 5 wt%, based on total mass of polycondensate and total of additives. Preferably the other additives as mentioned above are added between 0.1 and 2 wt%, based on total mass of polycondensate and total mass of additives.

Tetrakis(2,4-di-tert-butylphenyl)-4,4'-biphenylene-diphosphonite (Irgafos® PEPQ) is a very particularly preferred diphosphonite. It is preferred to use 0.01 to 5 wt%, more preferably 0.05 to 2 wt%, of said diphosphonite, relative to amount of the polycondensate.

The high-molecular polycondensate according to the process of the invention may suitably be used in the manufacture of shaped articles including extruded and injection moulded products. Preferably the high-molecular polycondensate according to the process of the invention.is used in the manufacture of fibres, monofilaments, films and bottles.

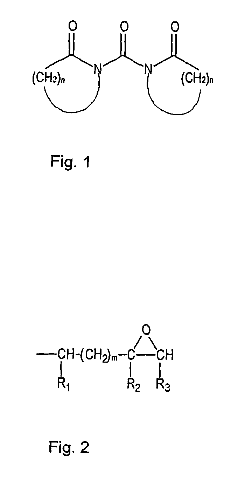

## Claims

1. Process for preparing a high-molecular polycondensate, i.e. a polyester, a polyamide, a polyester-amide, a polycarbonate, a polyether or a block copolymer by melt-mixing a polyester, a polyamide, a polycarbonate, a polyether or a mixture of at least two of these said polycondensates with a carbonyl bislactam according to formula (I) 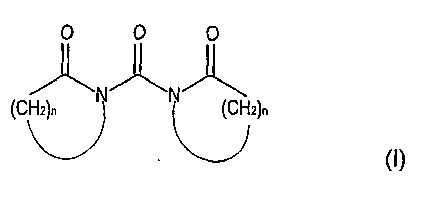 in which formula n = an integer of between 3 and 15,
**characterized in that** during said melt-mixing also a diepoxide is present

2. Process according to claim 1, wherein the diepoxide is a compound containing epoxy radicals of formula (II) 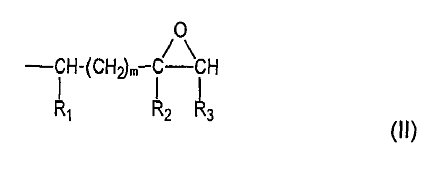 which radicals are linked direct to carbon, oxygen, nitrogen or sulfur atoms, wherein R₁and R₃ are both hydrogen, R₂ is hydrogen or methyl, and m=0, or wherein R₁and R₃, taken together, are -CH₂-CH₂- or -CH₂-CH₂-CH₂-, in which case R₂ is hydrogen and m=0 or 1.

3. Process according to claim 1, where in formula (I) n=5

4. Process according to any one of claims 1-3, wherein use is made of 0.1 to 4 wt.% of the bislactam, relative to amount of the polycondensate.

5. Process according to any one of claims 1-4, wherein use is made of 0.01-5 wt.% of diepoxide, relative to amount of the polycondensate.

6. Process according to any one of claims 1-5, wherein during the melt mixing additionally an additive and/or a filler and/or a reinforcing agent and/or a stabilizer is added.

7. Process according to any one of claims 1-6, wherein the melt mixing is done in an extruder.

8. Process according to any one of claims 1-7, wherein the melt mixing is done in a single screw extruder.

## Patentansprüche

1. Verfahren zur Herstellung eines hochmolekularen Polykondensats, d. h. eines Polyesters, eines Polyamids, eines Polyesteramids, eines Polycarbonats, eines Polyethers oder eines Blockcopolymers, durch Schmelzmischen eines Polyesters, eines Polyamids, eines Polycarbonats, eines Polyethers oder einer Mischung von mindestens zwei dieser Polykondensate mit einem Carbonylbislactam gemäß Formel (I) 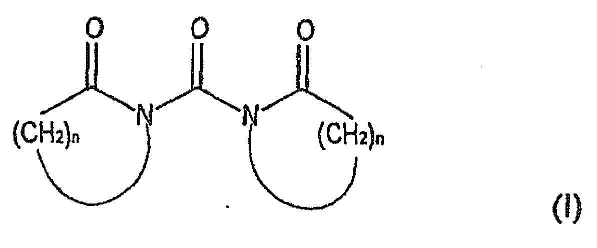 worin n = eine ganze Zahl zwischen 3 und 15,
**dadurch gekennzeichnet, daß** während des Schmelzmischens auch ein Diepoxid zugegen ist.

2. Verfahren nach Anspruch 1, bei dem es sich bei dem Diepoxid um eine Verbindung mit direkt an Kohlenstoff-, Sauerstoff-, Stickstoff- oder Schwefelatome gebundenen Epoxidresten der Formel (II) 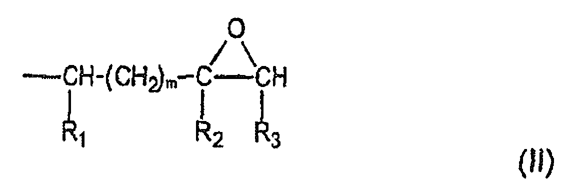 worin R₁ und R₃ beide für Wasserstoff stehen, R₂ für Wasserstoff oder Methyl steht und m = 0, oder worin R₁ und R₃ zusammengenommen für -CH₂-CH₂- oder -CH₂-CH₂-CH₂- stehen, wobei in diesem Fall R₂ für Wasserstoff steht und m = 0 oder 1, handelt.

3. Verfahren nach Anspruch 1, bei dem in Formel (I) n = 5.

4. Verfahren nach einem der Ansprüche 1-3, bei dem man 0,1 bis 4 Gew.-% des Bislactams, bezogen auf die Menge des Polykondensats, verwendet.

5. Verfahren nach einem der Ansprüche 1-4, bei dem man 0,01 bis 5 Gew.-% Diepoxid, bezogen auf die Menge des Polykondensats, verwendet.

6. Verfahren nach einem der Ansprüche 1-5, bei dem man während des Schmelzmischens zusätzlich ein Additiv und/oder einen Füllstoff und/oder ein Verstärkungsmittel und/oder einen Stabilisator zugibt.

7. Verfahren nach einem der Ansprüche 1-6, bei dem man das Schmelzmischen in einem Extruder durchführt.

8. Verfahren nach einem der Ansprüche 1-7, bei dem man das Schmelzmischen in einem Einschneckenextruder durchführt.

## Revendications

1. Procédé de préparation d'un polycondensat à masse moléculaire élevée, c'est-à-dire d'un polyester, d'un polyamide, d'un polyester-amide, d'un polycarbonate, d'un polyéther ou d'un copolymère séquencé par mélangeage à l'état fondu d'un polyester, d'un polyamide, d'un polycarbonate, d'un polyéther ou d'un mélange d'au moins deux desdits polycondensats avec un carbonyl-bis-lactame selon la formule (I) 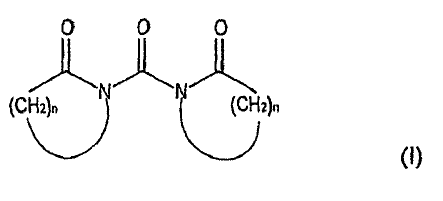 dans laquelle n est un entier compris entre 3 et 15,
**caractérisé en ce qu'**un diépoxyde est également présent durant ledit mélangeage à l'état fondu.

2. Procédé selon la revendication 1, dans lequel le diépoxyde est un composé renfermant des radicaux époxy de formule (II) 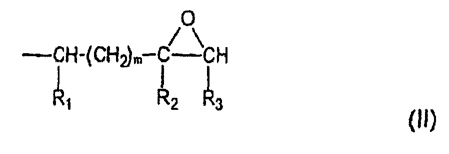 lesquels radicaux sont liés directement à des atomes de carbone, d'oxygène, d'azote ou de soufre,
dans laquelle R₁ et R₃ sont tous les deux un atome d'hydrogène, R₂ est un atome d'hydrogène ou un groupe méthyle et m vaut 0, ou
dans laquelle R₁ et R₃, pris conjointement, sont un groupe -CH₂-CH₂- ou un groupe -CH₂-CH₂-CH₂-, auquel cas R₂ est un atome d'hydrogène et m vaut 0 ou 1.

3. Procédé selon la revendication 1, dans lequel, dans la formule (I), n vaut 5.

4. Procédé selon l'une quelconque des revendications 1 à 3, dans lequel on utilise de 0,1 à 4 % en poids du bis-lactame, par rapport à la quantité du polycondensat.

5. Procédé selon l'une quelconque des revendications 1 à 4, dans lequel on utilise de 0,01 à 5 % en poids du diépoxyde, par rapport à la quantité du polycondensat.

6. Procédé selon l'une quelconque des revendications 1 à 5, dans lequel, durant le mélangeage à l'état fondu, on ajoute en outre un additif et/ou une charge et/ou un agent de renforcement et/ou un agent stabilisant.

7. Procédé selon l'une quelconque des revendications 1 à 6, dans lequel le mélangeage à l'état fondu est réalisé dans une extrudeuse.

8. Procédé selon l'une quelconque des revendications 1 à 7, dans lequel le mélangeage à l'état fondu est réalisé dans une extrudeuse mono-vis.
